# EUROPÄISCHE PATENTSCHRIFT

(11) **EP 4 178 401 B1**
(45) Veröffentlichungstag und Bekanntmachung des Hinweises auf die Patenterteilung: **15.11.2023**
(21) Anmeldenummer: 21749862.5
(22) Anmeldetag: 29.07.2021
(51) Int. Cl.: A47J 31/46, A47J 31/44

(54) **VERFAHREN ZUM SÜSSEN EINES MILCHHALTIGEN FLUIDS, ABGABEEINRICHTUNG, SÜSSUNGSEINHEIT UND VERWENDUNG EINER SÜSSUNGSEINHEIT**
METHOD FOR SWEETENING A MILK-CONTAINING FLUID, DISPENSING DEVICE, SWEETENING UNIT AND USE OF A SWEETENING UNIT
PROCÉDÉ D'ÉDULCORATION D'UN FLUIDE CONTENANT DU LAIT, DISPOSITIF DISTRIBUTEUR, UNITÉ D'ÉDULCORATION ET UTILISATION D'UNE UNITÉ D'ÉDULCORATION

(30) Priorität: 30.09.2020 EP 20199474
(43) Veröffentlichungstag der Anmeldung: 17.05.2023
(73) Patentinhaber: JURA ELEKTROAPPARATE AG, 4626 Niederbuchsiten (CH)
(72) Erfinder: GROB, Christoph, 4800 Zofingen (CH)
(74) Vertreter: Mertzlufft-Paufler, Cornelius
(86) Internationale Anmeldenummer: PCT/EP2021/071349
(87) Internationale Veröffentlichungsnummer: WO 2022/069098

(56) Entgegenhaltungen:
- EP-A1- 2 229 851
- EP-A1- 2 471 423
- WO-A1-03/105641
- WO-A1-2011/113474

## Beschreibung

Die Erfindung betrifft ein Verfahren zum Süßen eines michhaltigen Fluids. Derartige Verfahren sind aus der Praxis bekannt. Beispielsweise ist es bekannt, ein Süßungsmittel wie etwa Zucker Milch zuzugeben und die gesüßte Milch sodann einem Heißgetränk, zum Beispiel Kaffee, hinzuzufügen.

Die Erfindung betrifft ferner eine Süßungseinheit für eine Abgabevorrichtung für ein milchhaltiges Fluid, wobei die Süßungseinheit ein Behältnis für ein Süßungsmittel, einen Fluid-Einlass und einen Fluid-Auslass umfasst. Derartige Süßungseinheiten sind aus der Praxis bekannt. Bei Kaffee-Vollautomaten ist es beispielsweise bekannt, eine Flavour-Station vorzusehen, welche ein Behältnis für ein Süßungsmittel, einen Fluid-Einlass und einen Fluid-Auslass umfasst, wobei bei der Flavour-Station das Süßungsmittel einem durchgeleiteten Fluid aktiv hinzugemischt wird.

Die Erfindung betrifft weiter eine Abgabeeinrichtung für ein milchhaltiges Fluid mit einer Süßungseinheit und einem Grundgerät, wobei das Grundgerät eine Milchleiteinheit mit einem Milch-Auslass für ein milchhaltiges Fluid umfasst. Es existieren bereits Kaffee-Vollautomaten im Markt, die diese technischen Merkmale aufweisen.

Die Erfindung betrifft außerdem die Verwendung einer Süßungseinheit an einer Abgabeeinrichtung für ein milchhaltiges Fluid zum Süßen des milchhaltigen Fluids.

In EP 2 471 423 A1 wird ein Verfahren zum automatischen Erzeugen von Milchschaum in einer Milchschäumvorrichtung sowie eine Milchschäumvorrichtung zum automatischen Erzeugen von Milchschaum beschrieben.

In WO 03/105641 A1 ist eine Vorrichtung zur Zubereitung eines konsumierbaren Getränks mit einer feinblasigen Schaumschicht beschrieben.

In WO 2011/113474 A1 ist eine Kaffeemaschine beschrieben.

Aus EP 2 229 851 A1 ist eine Aufschäumvorrichtung zum Aufschäumen von Milch bekannt.

Der Erfindung liegt die Aufgabe zu Grunde, den Prozess des Süßens eines milchhaltigen Fluids und das Süßungsresultat zu verbessern.

Zur Lösung dieser Aufgabe schlägt die Erfindung die Merkmale von Anspruch 1 vor. Insbesondere wird somit erfindungsgemäß bei einem Verfahren zum Süßen eines michhaltigen Fluids zur Lösung der genannten Aufgabe vorgeschlagen, dass das michhaltige Fluid durch ein Süßungsmittel hindurchgeleitet wird. Bevorzugt wird das milchhaltige Fluid durch ein mit einem Süßungsmittel befülltes Behältnis hindurchgeleitet. Bei dem michhaltigen Fluid kann es sich beispielsweise um flüssige Milch, um ein Milch-Luft-Gemisch, um aufgeschäumte Milch oder um ein sonstiges Fluid mit einem Milchanteil handeln. Ein Fluid kann hierbei dadurch charakterisiert sein, dass es einen gasförmigen oder flüssigen Zustand oder eine beliebige Zwischenform aufweist.

Die Erfindung sieht daher vor, dass das herkömmliche Prinzip, das Süßungsmittel einem milchhaltigen Fluid hinzuzufügen, umgekehrt wird. Nach der Erfindung wird in Umkehrung dieses Prinzips das michhaltige Fluid durch das Süßungsmittel hindurchgeleitet. Hierdurch kann erreicht werden, dass das milchhaltige Fluid homogen und gut kontrollierbar gesüßt wird.

Das Hindurchleiten durch ein Süßungsmittel ist erfindungsgemäß dadurch charakterisiert, dass das milchhaltige Fluid durch ein Volumen, welches von dem Stoff, aus dem das Süßungsmittel besteht, eingenommen wird, hindurchgeleitet wird. Umschließt das Süßungsmittel daher beispielsweise einen mit Luft befüllten Hohlraum und wird das milchhaltige Fluid durch den Hohlraum geleitet, so wird das milchhaltige Fluid nicht durch das Süßungsmittel selbst hindurchgeleitet, sondern durch ein Volumen, das außerhalb des Süßungsmittels liegt.

Besteht das Süßungsmittel beispielsweise aus kleinen Körnern, so wird das Fluid durch das Süßungsmittel hindurchgeleitet, wenn es in das von den Körnern eingeschlossene Volumen eingeleitet wird und wieder aus diesem Volumen austritt. Das Süßungsmittel weist erfindungsgemäß Eigenschaften eines Fluids auf. Derartige Eigenschaften haben beispielsweise flüssige Süßungsmittel, aber auch körnige Süßungsmittel. Alternativ oder zusätzlich ist erfindungsgemäß vorgesehen, dass das Süßungsmittel nicht formstabil ist. In den zuvor genannten Fällen kann sich in einem von dem Süßungsmittel eingenommenen Volumen kein Hohlraum ausbilden und das von dem Süßungsmittel eingenommene Volumen hat nach oben eine abgegrenzte Oberfläche. Das Volumen kann gegen ein Durchsickern des Süßungsmittels nach unten abgegrenzt sein, beispielsweise durch einen Boden eines Behältnisses. Die untere Abgrenzung und die Oberfläche des Süßungsmittels grenzen ein von dem Süßungsmittel eingenommenes Volumen ab. In einem solchen Fall umfasst das Hindurchleiten des milchhaltigen Fluids durch das Süßungsmittel, dass das milchhaltige Fluid in das Volumen eintritt und wieder aus diesem Volumen austritt.

Bei einer bevorzugten Ausgestaltung des Verfahrens kann vorgesehen sein, dass eine Viskosität des milchhaltigen Fluids niedriger als eine Viskosität des Süßungsmittels ist. Dies erleichtert das Hindurchleiten des Fluids durch das Süßungsmittel.

Alternativ oder zusätzlich kann vorgesehen sein, dass Milch zur Bildung des milchhaltigen Fluids zunächst aufgeschäumt wird, bevor sie in das Behältnis geleitet wird. Bevorzugt wird zum Aufschäumen der Milch unter Ausnutzen des Venturi-Effekts mittels Dampf ein Unterdruck erzeugt, sodass Milch und Luft angezogen werden und das Luft-Milch-Gemisch in einer Mischkammer aufgeschäumt wird. Bevorzugt wird die Milch mittels des Dampfes aufgewärmt.

Bei einer weiteren vorteilhaften Ausgestaltung des Verfahrens kann vorgesehen sein, dass das milchhaltige Fluid in das Behältnis eingespritzt oder mit hoher Geschwindigkeit in das Behältnis eingeleitet wird, sodass das michhaltige Fluid durch das Süßungsmittel hindurchgeleitet wird. Das Einspritzen oder Einleiten mit hoher Geschwindigkeit kann gut dosiert werden und somit ein kontrolliertes Hindurchleiten durch das Süßungsmittel erreicht werden.

Bei einer weiteren vorteilhaften Ausgestaltung des Verfahrens kann vorgesehen sein, dass das in das Behältnis gelangende michhaltige Fluid von einem Strömungshindernis umgelenkt wird. Vorzugsweise erfährt das michhaltige Fluid hierbei eine Richtungsumkehr, bevor es aus dem Behältnis austritt. Das Strömungshindernis kann beispielsweise durch eine Wand, eine Trennwand und/oder einen Boden des Behältnisses gebildet sein. Das Umlenken und die Richtungsumkehr sind förderlich für die Durchmischung des milchhaltigen Fluids mit dem Süßungsmittel.

Bei einer weiteren vorteilhaften Ausgestaltung des Verfahrens kann vorgesehen sein, dass das milchhaltige Fluid so durch das Süßungsmittel hindurchgeleitet wird, dass es nach dem Eintritt in das Süßungsmittel dieses wieder nach oben verlässt. Alternativ oder zusätzlich kann vorgesehen sein, dass das michhaltige Fluid so in das Behältnis eingespritzt oder eingeleitet wird, dass es beim Eintritt nach unten gerichtet ist und/oder keine Geschwindigkeitskomponente nach oben hat. Derartige Ausgestaltungen können die Durchmischung von milchhaltigem Fluid und Süßungsmittel weiter fördern.

Bei einer weiteren erfindungsgemäßen Ausgestaltung des Verfahrens ist vorgesehen, dass das Süßungsmittel ein flüssiges Süßungsmittel ist. Das Süßungsmittel kann beispielsweise ein Sirup sein. Alternativ oder zusätzlich ist vorgesehen, dass das Süßungsmittel keine Formfestigkeit besitzt. Diese Eigenschaft hat beispielsweise flüssiges Süßungsmittel oder ein aus kristallinen Körnern bestehender Zucker.

Bei einer weiteren vorteilhaften Ausgestaltung des Verfahrens kann vorgesehen sein, dass das Süßungsmittel bei einem Einleiten des michhaltigen Fluids ruht. Hierdurch kann beispielsweise die Bereitstellung des Süßungsmittels erleichtert werden.

Zur Lösung der genannten Aufgabe sind erfindungsgemäß die Merkmale des auf eine Süßungseinheit gerichteten nebengeordneten Anspruchs vorgesehen. Insbesondere wird zur Lösung der genannten Aufgabe somit erfindungsgemäß bei einer Süßungseinheit der eingangs beschriebenen Art vorgeschlagen, dass der Fluid-Einlass und der Fluid-Auslass so ausgebildet sind, dass ein Fluidstrom durch das Süßungsmittel erzeugbar ist. Bevorzugt ist der Fluid-Auslass als Überlauf ausgebildet. Weiter ist das Behältnis bevorzugt trogförmig ausgebildet. Bei der Abgabeeinrichtung handelt es sich bevorzugt um einen Kaffee-Vollautomaten und/oder um einen Milchaufschäumer. Durch die Ausbildbarkeit eines Fluidstroms zwischen dem Fluid-Einlass und dem Fluid-Auslass ist erreichbar, dass ein milchhaltiges Fluid durch ein sich in dem Behältnis befindlichen Süßungsmittel hindurchgeleitet werden kann. Die Vorteile sind diesbezüglich bereits weiter oben beschrieben worden.

Ist der Fluid-Auslass als Überlauf ausgebildet, so kann das Behältnis mit Süßungsmittel befüllt werden bis zu einem Füllstand, der unterhalb des Überlaufs liegt. Wird nun milchhaltiges Fluid in das Behältnis und durch das Süßungsmittel hindurchgeleitet, so kann es das Behältnis über den Überlauf wieder verlassen. Dies kann auch dadurch erfolgen, dass durch das Einleiten des milchhaltigen Fluids der Füllstand in dem Behältnis ansteigt und dass sodann nach oben gelangendes, mit dem Süßungsmittel angereichertes milchhaltiges Fluid das Behältnis über den Überlauf wieder verlässt.

Bei einer vorteilhaften Ausgestaltung der Süßungseinheit kann vorgesehen sein, dass der Fluid-Auslass als ein von einem Boden der Süßungseinheit nach oben ragender Überlaufkragen ausgebildet ist. Bevorzugt ist der Überlaufkragen zylinderförmig und/oder allseitig umströmbar ausgebildet. Weiter ist der Überlaufkragen bevorzugt zumindest in einem unteren Bereich zur Seite vollständig geschlossen und/oder oberhalb des geschlossenen Bereichs geöffnet und/oder unten geöffnet. Insbesondere kann der vorgenannte Überlauf als ein derartiger Überlaufkragen ausgebildet sein. Eine derartige Ausgestaltung des Fluid-Auslasses hat den Vorteil, dass um diesen herum Süßungsmittel angeordnet werden kann und das milchhaltige Fluid kontrolliert durch das Süßungsmittel hindurchgeleitet werden kann.

Bei einer erfindungsgemäßen Ausgestaltung der Süßungseinheit ist vorgesehen, dass der Fluid-Einlass als ein von einem Boden der Süßungseinheit, beispielsweise den bereits zuvor erwähnten Boden, nach oben ragender Einlasskragen ausgebildet ist, der zumindest in einem Bereich zur Seite nicht vollständig geschlossen ist. Der Einlasskragen ist bevorzugt zylinderförmig ausgebildet. Weiter ist der Einlasskragen bevorzugt innenseitig nach oben geöffnet und nach unten geschlossen. Alternativ oder zusätzlich kann vorgesehen sein, dass der Fluid-Einlass mindestens einen Schlitz aufweist. Bevorzugt verläuft der Schlitz vertikal. Weiter ist der Schlitz bevorzugt seitlich in einem Einlasskragen, beispielsweise in dem bereits zuvor erwähnten Einlasskragen, ausgebildet. Derartige Ausgestaltungen haben den Vorteil, dass das milchhaltige Fluid kontrolliert und mit hohem Druck in das Behältnis und somit das Süßungsmittel eingespritzt werden kann.

Bei einer weiteren vorteilhaften Ausgestaltung der Süßungseinheit kann vorgesehen sein, dass der Fluid-Einlass an seinem oberen Ende eine nach innen gebogene Krempe aufweist. Bevorzugt ist die Krempe oberseitig angeschrägt. Alternativ oder zusätzlich kann vorgesehen sein, dass der Fluid-Einlass zumindest an einem freien Ende einen elastischen Querschnitt aufweist.

Es kann vorgesehen sein, dass der Fluid-Einlass höher nach oben ragt als der Fluid-Auslass. Bevorzugt ist der Fluid-Einlass diesbezüglich als Einlasskragen ausgebildet. Hierdurch kann erreicht werden, dass der Einspritzbereich erhöht wird.

Alternativ oder zusätzlich kann vorgesehen sein, dass der Überlauf zu allen Seiten beabstandet ist von einer seitlichen Umrandung der Süßungseinheit. Bevorzugt bilden hierbei der Überlauf außenseitig und/oder die seitlich Umrandung innenseitig keine Kanten aus. Derartige Ausgestaltungen begünstigen ein Umlenken und eine Richtungsumkehr eines in das Behältnis eingeleiteten milchhaltigen Fluids.

Bei einer Ausgestaltung der Süßungseinheit kann vorgesehen sein, dass eine erste Seitenwand des Überlaufs außenseitig bündig an einen Seitenrand einer ersten Öffnung des Fluid-Einlasses anschließt. Bevorzugt schließt eine der ersten Seitenwand gegenüberliegende zweite Seitenwand außenseitig bündig an einen Seitenrand einer zweiten Öffnung des Fluid-Einlasses an. Durch die Öffnung oder Öffnungen eingeleitetes Fluid kann hierbei an der Seitenwand entlang geführt und somit in gewünschter Weise gelenkt werden.

Bei einer weiteren vorteilhaften Ausgestaltung der Süßungseinheit kann vorgesehen sein, dass ein Schlitz, beispielweise der zuvor erwähnte Schlitz, in dem Fluid-Einlass nach oben geschlossen ist. Bevorzugt endet der Schlitz unterhalb eines oberen Endes des Fluid-Auslaufs. Hierdurch kann verhindert werden, dass Spritzer zu dem Fluid-Auslauf gelangen. Allerdings kann auch vorgesehen sein, dass der Schlitz den Fluid-Auslauf nach oben überragt. Die Begrenzung des Schlitzes nach oben hat den Vorteil, dass Spritzer, die ansonsten die Abgabeeinrichtung nach oben verschmutzen könnten, vermieden werden können. Einerseits ist der Abstand nach oben größer. Zum anderen kann das Süßungsmittel in dem Behältnis bis oberhalb des Schlitzes aufgefüllt werden, so dass durch den Schlitz eingeleitetes milchhaltiges Fluid zunächst des Süßungsmittel eintritt, wodurch ebenfalls verhindert wird, dass Spritzer überhaupt nach oben aus dem Süßungsmittel austreten.

Es kann vorgesehen sein, dass der Fluid-Einlass und der Fluid-Auslass voneinander beabstandet sind. Diese Beabstandung kann vorteilhaft sein, da hierdurch ein freier Weg des Fluidstroms durch das Süßungsmittel erhöht werden kann.

Es kann vorgesehen sein, dass der Fluid-Einlass und der Fluid-Auslass ineinander übergehen. Bevorzugt bildet ein Bereich des Überlaufkragens zugleich einen Bereich des Einlasskragens. Derartige Ausgestaltungen haben den Vorteil, dass ein Austritt eines eingeleiteten milchhaltigen Fluids erfordert, dass das Fluid eine Richtungsumkehr einnimmt, wodurch die Durchmischung verbessert wird.

Bei einer weiteren vorteilhaften Ausgestaltung der Süßungseinheit kann vorgesehen sein, dass diese einen offenen Deckel aufweist. Bevorzugt hat die Süßungseinheit im Bereich des Fluid-Einlasses einen offenen Deckel.

In einer weiteren bevorzugten Variante weist der Deckel und/oder die Süßungseinheit eine Öffnung zum Befüllen der Süßungseinheit mit einem Süßungsmittel auf.

Die Existenz eines Deckels hat den Vorteil, dass innerhalb des Behältnisses auftretende Spritzer das Abgabegerät nicht verschmutzen können. Durch die Öffnung kann das Süßungsmittel auch ohne Abnahme des Deckels oder Aktivierung eines Öffnungsmechanismus in das Behältnis eingefüllt werden.

Um zu verhindern, dass Spritzer aus einer Öffnung in dem Deckel austreten, kann der Deckel einen Mechanismus aufweisen, mit dem das Behältnis öffenbar und verschließbar ist. Beispielsweise kann der Deckel eine Klappe aufweisen. Das Behältnis kann mittels des Mechanismus zum Befüllen des Behältnisses mit Süßungsmittel geöffnet werden und nach dem Befüllen wieder geschlossen werden. Bevorzugt ist der Deckel mittels des Mechanismus bis auf eine mögliche Öffnung für den Fluid-Einlass vollständig verschließbar.

Bei einer weiteren vorteilhaften Ausgestaltung der Süßungseinheit kann vorgesehen sein, dass in dem Behältnis eine dieses nur teilweise verschließende Trennwand ausgebildet ist. Bevorzugt verschließt die Trennwand das Behältnis größtenteils. Es kann insbesondere vorgesehen sein, dass die Öffnung einen Spalt bildet. Weiter belässt die Trennwand bevorzugt nach unten und/oder seitlich eine Öffnung in dem Behältnis. Weiter bevorzugt sind der Fluid-Einlass und der Fluid-Auslass auf einer gleichen Seite der Trennwand ausgebildet. Die Trennwand kann dazu führen, dass Süßungsmittel, das sich jenseits der Trennwand befindet, nicht zu schnell zurückläuft und dazu führen könnte, dass reines Süßungsmittel aus dem diesseits der Trennwand angeordneten Fluid-Auslauf austritt.

Zur Lösung der genannten Aufgabe sind erfindungsgemäß die Merkmale des auf eine Abgabeeinrichtung für ein milchhaltiges Fluid gerichteten nebengeordneten Anspruchs vorgesehen. Insbesondere wird zur Lösung der genannten Aufgabe somit erfindungsgemäß bei einer Abgabeeinrichtung der eingangs beschriebenen Art vorgeschlagen, dass die Süßungseinheit an dem Milch-Auslass aufsetzbar oder aufgesetzt ist und erfindungsgemäß, insbesondere wie zuvor beschrieben und/oder nach einem der auf eine Süßungseinheit gerichteten Schutzansprüche, ausgebildet ist. Bevorzugt ist die Süßungseinheit wieder abnehmbar. Dies hat den Vorteil, dass die Abgabeeinrichtung, bei der es sich insbesondere um ein Kaffee-Vollautomaten handeln kann, auch ohne Süßungseinheit verwendbar bleibt, diese jedoch optional auch verwendbar ist.

Bei einer vorteilhaften Ausgestaltung der Abgabeeinrichtung kann vorgesehen sein, dass die Milchleiteinheit eine Milchaufschäumvorrichtung umfasst. Alternativ oder zusätzlich kann vorgesehen sein, dass die Süßungseinheit schwenkbar aufsetzbar oder aufgesetzt ist. Bevorzugt ist hierbei eine Schwenkachse durch eine Achse des Milch-Auslasses gebildet. Derartige Ausgestaltungen haben den Vorteil, dass die Süßungseinheit auf einfache Weise neu befüllbar ist und/oder gereinigt werden kann.

Zur Lösung der genannten Aufgabe sind erfindungsgemäß die Merkmale des auf eine Verwendung einer Süßungseinheit gerichteten nebengeordneten Anspruchs vorgesehen. Insbesondere wird zur Lösung der genannten Aufgabe somit erfindungsgemäß bei einer Verwendung einer Süßungseinheit vorgeschlagen, dass die Süßungseinheit an einer Abgabeeinrichtung für ein milchhaltiges Fluid zum Süßen des michhaltigen Fluids verwendet wird. Hierbei ist die Süßungseinheit erfindungsgemäß, insbesondere wie zuvor beschrieben und/oder nach einem der auf eine Süßungseinheit gerichteten Schutzansprüche, ausgebildet. Bevorzugt ist ferner die Abgabeeinrichtung erfindungsgemäß, insbesondere wie zuvor beschrieben und/oder nach einem der auf eine Abgabeeinrichtung gerichteten Schutzansprüche, ausgebildet. Bei der Abgabeeinrichtung handelt es sich bevorzugt um einen Kaffee-Vollautomaten. Die Verwendung der Süßungseinheit erfolgt bevorzugt in einem Verfahren, das erfindungsgemäß, insbesondere wie zuvor beschrieben und/oder nach einem auf ein Verfahren zum Süßen eines milchhaltigen Fluids gerichteten Schutzansprüche, ausgebildet ist.

Die Erfindung wird nun anhand einiger weniger Ausgangsbeispiele näher beschrieben, ist jedoch nicht auf diese wenigen Ausführungsbeispiel beschränkt.

Es zeigen:
- Fig. 1A und Fig. 1B: eine Abgabeeinrichtung in Form eines Milchaufschäumers mit aufgesetzter Süßungseinheit,
- Fig. 2A bis Fig. 2C: ein erstes Ausführungsbeispiel einer erfindungsgemäßen Süßungseinheit,
- Fig. 3A bis Fig. 3D: ein weiteres Ausführungsbeispiel einer erfindungsgemäßen Süßungseinheit,

- Fig. 4: ein weiteres Ausführungsbeispiel einer erfindungsgemäßen Süßungseinheit,
- Fig. 5: ein weiteres Ausführungsbeispiel einer erfindungsgemäßen Süßungseinheit mit Deckel,
- Fig. 6: ein weiteres Ausführungsbeispiel einer erfindungsgemäßen Süßungseinheit mit Deckel,

- Fig. 7A bis Fig. 7B: ein Ausführungsbeispiel einer erfindungsgemäßen Süßungseinheit mit Deckel und Trennwand,
- Fig. 8A bis Fig. 8B: ein weiteres Ausführungsbeispiel einer erfindungsgemäßen Süßungseinheit mit Deckel und Trennwand,
- Fig. 9A bis Fig. 9B: ein weiteres Ausführungsbeispiel einer erfindungsgemäßen Süßungseinheit mit Deckel und Trennwand und die
- Fig. 10A bis Fig. 10B: ein weiteres Ausführungsbeispiel einer erfindungsgemäßen Süßungseinheit mit klappbarem Deckel.

Bei der nachfolgenden Beschreibung der Erfindung erhalten in ihrer Funktion übereinstimmende Elemente auch bei abweichender Gestaltung oder Formgebung übereinstimmende Bezugszahlen.

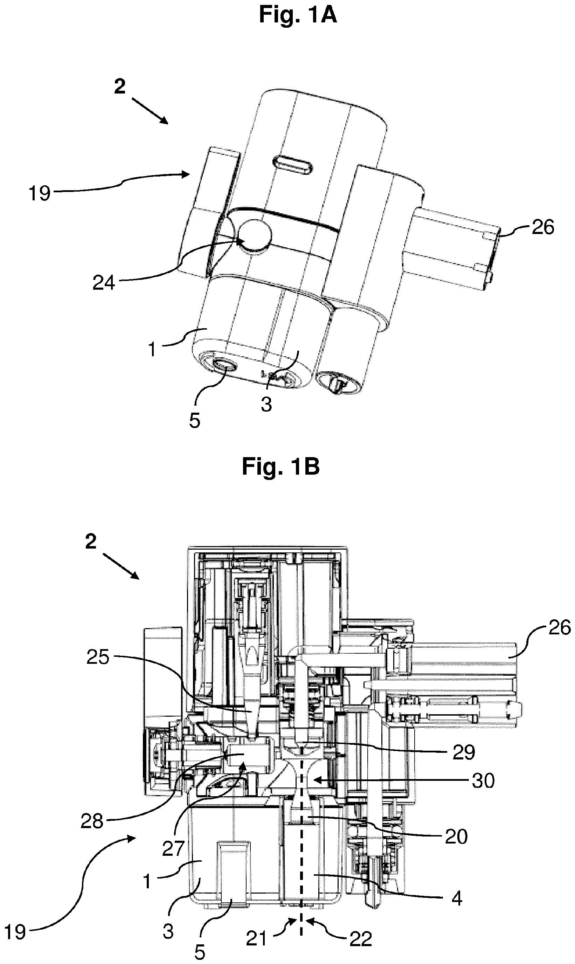

Fig. 1A zeigt in perspektivischer Ansicht eine als Milchaufschäumvorrichtung ausgebildete Abgabeeinrichtung 2, wobei diese erfindungsgemäß ausgebildet ist. Fig. 1B zeigt eine Schnittdarstellung dieser Abgabeeinrichtung 2. Die Abgabeeinrichtung 2 ist Teil eines Kaffee-Vollautomaten, der auch insgesamt eine Abgabeeinrichtung 2 bildet. Die Abgabeeinrichtung 2 weist eine Süßungseinheit 1 auf, welche abnehmbar an der Abgabeeinrichtung 2 angebracht ist. Über den Milch-Auslass 20 wird im Betrieb aufgeschäumte Milch in das Behältnis 3 der Süßungseinheit 1 eingeleitet. Die Süßungseinheit 1 ist hierbei so an der Abgabeeinrichtung 2 angebracht, dass sie um die Achse 22 des Milch-Auslasses 20 geschwenkt werden kann. Die Achse 22 des Milch-Auslasses 20 bildet daher eine Schwenkachse 21 der Süßungseinheit 1.

Wird die Süßungseinheit 1 zur Seite geschwenkt, so kann Süßungsmittel in das Behältnis 3 der Süßungseinheit 1 eingefüllt werden. Wird sodann die Süßungseinheit 1 zurückgeschwenkt in eine Gebrauchsposition, so kann die aufgeschäumte Milch durch das Behältnis 3 und durch das Süßungsmittel in dem Behältnis 3 hindurchgeleitet werden, sodass die Milch gesüßt wird. Die gesüßte Milch tritt sodann durch den Fluid-Auslass 5 aus. Die nach unten fließende Milch kann sodann aufgefangen werden, indem beispielsweise eine Kaffeetasse oder ein anderes Gefäß unter dem Fluid-Auslass 5 angeordnet wird.

Die Abgabeeinrichtung 2 umfasst eine Milchleiteinheit 19. In Fig. 1A ist erkennbar, dass außenseitig ein Milch-Einlass 24 ausgebildet ist. Der Milch-Einlass 24 ist in Fig. 1A mit einer Verschlusskappe versehen. Diese ist entfernbar und ein Schlauch kann an den Milch-Einlass 24 angeschlossen werden, so dass Milch über den Schlauch und den Milch-Einlass 24 in die Milchleiteinheit 19 eingeleitet werden kann. Die eingeleitete Milch wird sodann über eine Milchzufuhr 27 in eine Luft-Milch-Kammer 28 eingeleitet. Dort wird die Milch über eine Luftzufuhr 25 zu einem Luft-Milch-Gemisch verarbeitet. Das Luft-Milch-Gemisch tritt sodann in die Mischkammer 30 ein. Dies erfolgt, indem ein Unterdruck mittels der Venturi-Düse 29 erzeugt wird. Für die Venturi-Düse 29 hat die Abgabeeinrichtung 2 eine Dampfzufuhr 26. In der Mischkammer 30 wird das Luft-Milch-Gemisch zu einem Milchschaum aufgeschäumt. Der Milchschaum oder das sonstige milchhaltige Fluid verlässt die Milchleiteinheit 19 und die Abgabevorrichtung 2 sodann über den Milch-Auslass 20 nach unten und tritt dort in das Behältnis 3 der Süßungseinheit 1 ein.

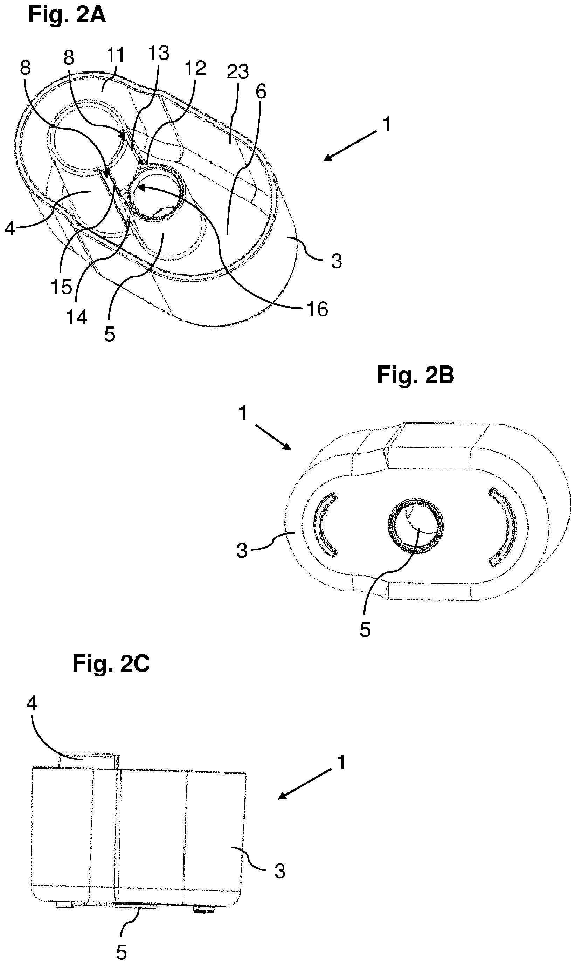

Fig. 2A bis Fig. 2C zeigen ein erstes Ausführungsbeispiel einer erfindungsgemäßen Süßungseinheit 1 aus unterschiedlichen Perspektiven. Die Süßungseinheit 1 umfasst ein Behältnis 3, in das Süßungsmittel eingefüllt werden kann. Das Behältnis 3 hat einen Boden 6 und seitlich eine Umrandung 23, welche das Behältnis 3 seitlich vollständig umschließt. Innenseitig der Umrandung 23 sind Wände 11 ausgebildet. Das Behältnis 3 ist nach oben geöffnet.

Beabstandet von der Umrandung 23 sind in dem Behältnis 3 zwei nach oben ragende, zylinderförmige Kragen ausgebildet. Ein erster Kragen ist ein Einlasskragen, der einen Fluid-Einlass 4 bildet. Der zweite Kragen ist ein Überlaufkragen, der einen Fluid-Auslass 5 bildet. Der Fluid-Einlass 4 ist nach unten geschlossen. Der Fluid-Einlass 4 ragt daher vom geschlossenen Boden nach oben hervor und ist höher ausgebildet als die Wände 11, wie in Fig. 2C erkennbar. Der Fluid-Einlass 4 ist nach oben geöffnet, sodass von oben milchhaltiges Fluid in den Fluid-Einlass 4 eintreten kann. Um aus dem Fluid-Einlass 4 austreten zu können, sind an seiner seitlichen Umrandung Schlitze 8 bildende Öffnungen ausgebildet. Die Schlitze 8 reichen hierbei vom Boden bis zur obigen Öffnung des Fluid-Einlasses 4. Die Schlitze 8 erstrecken sich daher über die gesamte Höhe des Fluid-Einlasses 4. An jeweils einem Seitenrand 13, 15 der Schlitze 8 schließt jeweils bündig eine erste Seitenwand 12 des Fluid-Auslasses 5 und eine zweite Seitenwand 14 des Fluid-Auslasses 5 an. Ein Bereich 16 des Fluid-Auslasses 5 bildet zugleich einen Bereich 16 des Fluid-Einlasses 4.

Der Fluid-Auslass 5 ist als Überlaufkragen ausgebildet. Der Fluid-Auslass 5 ist nach oben und nach unten geöffnet, sodass von oben eintretendes Fluid nach unten austreten kann. In Fig. 2B ist erkennbar, dass der Fluid-Auslass 5 etwa mittig des Behältnisses 3 angeordnet ist. Der Durchmesser des Fluid-Auslasses 5 ist in dem hier gezeigten Ausführungsbeispiel geringer als der Durchmesser des Fluid-Einlasses 4. Der Fluid-Auslass 5 weist eine geringere Höhe auf als der Fluid-Einlass 4. Außerdem weist der Fluid-Auslass 5 eine geringere Höhe auf als die Umrandung 23 des Behältnisses 3. Dies hat zur Folge, dass das Behältnis 3 bis zu der Höhe des Fluid-Auslasses 5 aufgefüllt werden kann und dass sodann das aufgefüllte Fluid in den Fluid-Auslass 5 eintritt und das Fluid nach unten abgeführt wird.

Die Süßungseinheit 1 ist aufgrund seiner Ausgestaltung so ausgebildet, dass ein in den Fluid-Einlass 4 vorzugsweise unter Druck hineingelangender Fluidstrom durch in dem Behältnis 3 befindliches Süßungsmittel erzeugbar ist. Fluid, welches durch die Schlitze 8 gedrückt wird, wird durch das mit Süßungsmittel befüllte Behältnis 3 hindurchgeleitet und verlässt die Süßungseinheit 1 durch den Fluid-Auslass 5. Dies wird dadurch unterstützt, dass das Behältnis 3 trogförmig ausgebildet ist.

Milchhaltiges Fluid, welches durch die Schlitze 8 hindurch in das Behältnis 3 eingespritzt oder mit hoher Geschwindigkeit in dieses eingeleitet wird, wird an einer Wand 11 des Behältnisses 3 umgelenkt, erfährt hierbei eine Richtungsumkehr und wird sodann über den Fluid-Auslass 5 abgeleitet.

Dadurch, dass das milchhaltige Fluid durch das Süßungsmittel hindurchgeleitet wird, nimmt es dosiert Süßungsmittel auf, so dass das mithaltige Fluid gesüßt wird.

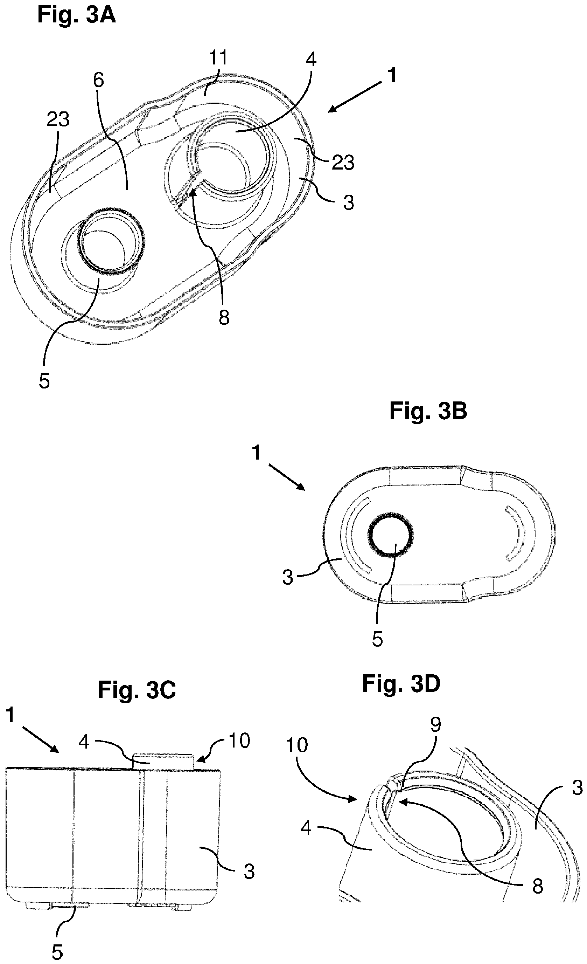

Fig. 3A bis Fig. 3D zeigen ein weiteres Ausführungsbeispiel einer erfindungsgemäß ausgebildeten Süßungseinheit 1. Hier sind Fluid-Einlass 4 und Fluid-Auslass 5 beabstandet voneinander angeordnet. Der Fluid-Auslass 5 ist exzentrisch ausgebildet. Wie aus Fig. 3B erkennbar, hat der Fluid-Auslass 5 zu einem kreisförmigen Abschnitt der Umrandung 23 des Behältnisses 3 einen gleichbleibenden Abstand. Auch der Fluid-Einlass 4 hat zu einem kreisförmigen Abschnitt der Umrandung 23 des Behältnisses 3 einen gleichbleibenden Abstand wie insbesondere Fig. 3A zeigt. Es kann auch gesagt werden, dass der Fluid-Einlass 4 und ein Abschnitt der Umrandung 23 konzentrisch angeordnet sind. Gleichsam sind der Fluid-Auslass 5 und ein anderer Abschnitt der Umrandung 23 konzentrisch angeordnet.

Im Unterschied zu dem in Fig. 2A bis Fig. 2C gezeigten Ausführungsbeispiel hat der Fluid-Einlass 4 seitlich nur eine Öffnung, die auch in diesem Beispiel als schmaler Schlitz 8 ausgebildet ist. Die schlitzförmige Ausgestaltung der Öffnung hat den Vorteil, dass milchhaltiges Fluid mit hoher Geschwindigkeit in das Behältnis 3 eingespritzt werden kann.

Wie aus Fig. 3D erkennbar hat der Fluid-Einlass 4 an seinem oberen freien Ende 10 eine nach innen gebogene Krempe 9, die oberseitig angeschrägt ist. Ferner ist in dem hier gezeigten Ausführungsbeispiel der Fluid-Einlass 4 an seinem oberen freien Ende 10 elastisch ausgebildet, so dass der Querschnitt elastisch anpassbar ist.

Der Schlitz 8 ist vertikal ausgebildet. Der Schlitz 8 ist an einer Mittelebene ausgebildet, welche das Behältnis 3 entlang seiner Längsachse in zwei spiegelsymmetrische Teile zerteilt. Der Schlitz 8 ist so angeordnet, dass ein Fluid, welches durch den Schlitz 8 hindurchtritt, entlang einer Längsachse des Behältnisses 3 in dieses eingespritzt wird.

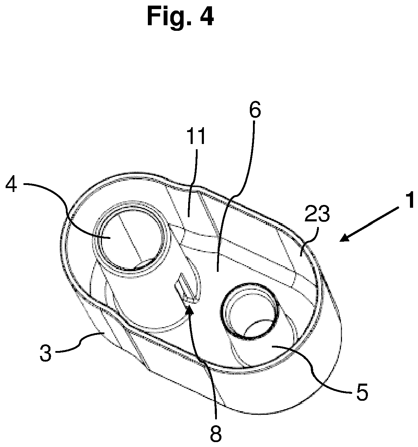

Fig. 4 zeigt ein weiteres Ausführungsbeispiel einer erfindungsgemäß ausgebildeten Süßungseinheit 1. Im Unterschied zu den zuvor beschriebenen Ausführungsbeispielen ist der Schlitz 8 nicht über die gesamte Höhe des Fluid-Einlasses 4 ausgebildet, sondern ist nur an einem unteren Bereich des Einlasskragens ausgebildet. Hierbei hat der Schlitz 8 eine Höhe, die geringer ist als die Höhe des Fluid-Auslasses 5.

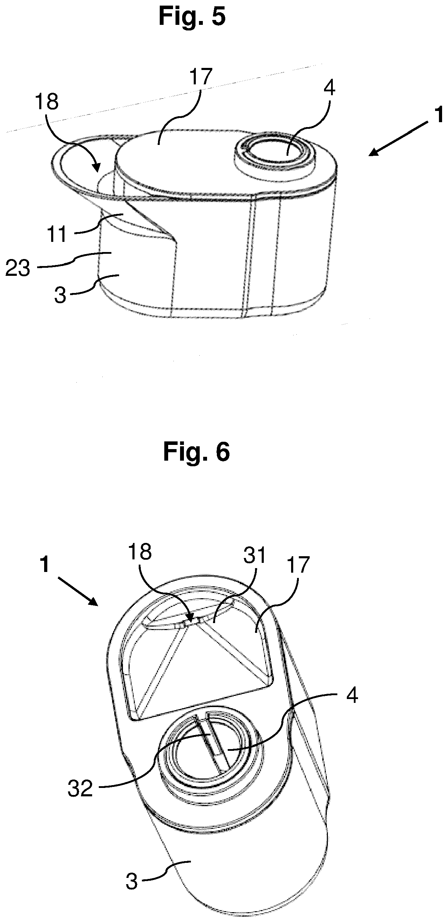

Fig. 5 und Fig. 6 zeigen zwei weitere Ausführungsbeispiele erfindungsgemäß ausgebildeter Süßungseinheiten 1, wobei die Süßungseinheiten 1 jeweils nach oben geschlossen sind, indem auf dem Behältnis 3 ein Deckel 17 aufgesetzt ist. Der Deckel 17 weist jeweils eine Öffnung 18 auf. In dem in Fig. 5 gezeigten Ausführungsbeispiel ist die Öffnung 18 dadurch gebildet, dass eine Wand 11 des Behältnisses 3 schnabelförmig nach vorne gewölbt ist. Die Öffnung 18 ist daher zwischen der Umrandung 23 bzw. zwischen der Wand 11 und dem Deckel 17 ausgebildet.

In Fig. 6 ist ebenfalls eine Öffnung 18 ausgebildet. Diese ist im Unterschied zu dem in Fig. 5 gezeigten Ausführungsbeispiel direkt im Deckel 17 ausgebildet. In dem hier gezeigten Ausführungsbeispiel ist die Öffnung 18 in einer Mulde 31 des Deckels 17 ausgebildet. Dies hat den Vorteil, dass ein Befüllen erleichtert wird, da das Süßungsmittel zunächst in die Mulde 31 gelangt, bevor es sodann über die Öffnung 18 in das Behältnis 3 eingefüllt wird. Auch in dem in Fig. 5 gezeigten Ausführungsbeispiel dient die Öffnung 18 in erster Linie dem Befüllen des Behältnisses 3 mit Süßungsmittel.

Die in den Ausführungsbeispielen gezeigten Süßungseinheiten 1 sind geeignet für unterschiedliche Arten von Süßungsmitteln wie flüssigen Süßungsmitteln oder auch kristallin-körnigen Süßungsmitteln.

In dem in Fig. 6 gezeigten Ausführungsbeispiel verschließt ein Teil des Deckels 17 einen oberen Bereich einer seitlich an dem Fluid-Einlass 4 ausgebildeten Öffnung. Alternativ kann auch bei Ausgestaltungen, welche keinen Deckel 17 aufweisen wie die Ausgestaltungen in Fig. 2 und Fig. 3 der Schlitz 8 teilweise verschlossen werden, beispielsweise indem ein Ein- oder Ansteckteil verwendet wird, das innerhalb und/oder außerhalb des Fluid-Einlasses 4 an diesen angesteckt werden kann.

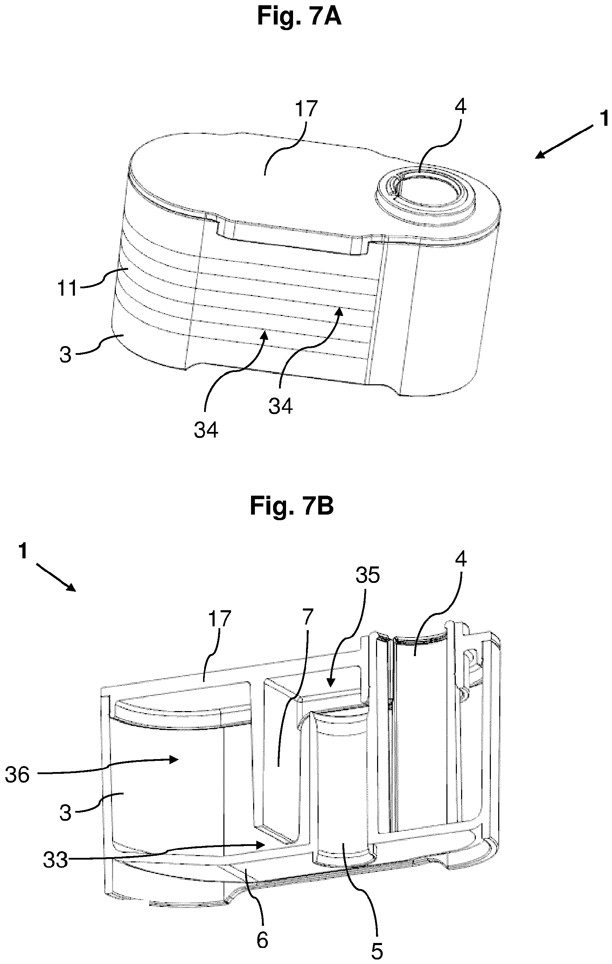

Fig. 7A bis Fig. 10B zeigen vier weitere Ausführungsbeispiele erfindungsgemäß ausgebildeter Süßungseinheiten 1. Die Süßungseinheiten 1 haben jeweils einen Deckel 17 und zusätzlich eine Trennwand 7, die das Behältnis 3 in zwei Kammern 35 und 36 aufteilt. Eine Trennwand 7 kann in alternativen Ausführungsbeispielen auch ohne Deckel 17 ausgebildet sein.

Die Trennwand 7 trennt die Kammern 35 und 36 nicht vollständig, sondern lässt eine Öffnung 33, die die beiden Kammern 35 und 36 miteinander verbindet und einen Fluss von in dem Behältnis 3 befindlichem Süßungsmittel zwischen den Kammern 35 und 36 ermöglicht. Die Öffnung 33 ist in den gezeigten Ausführungsbeispielen schmal ausgebildet und bildet einen Spalt.

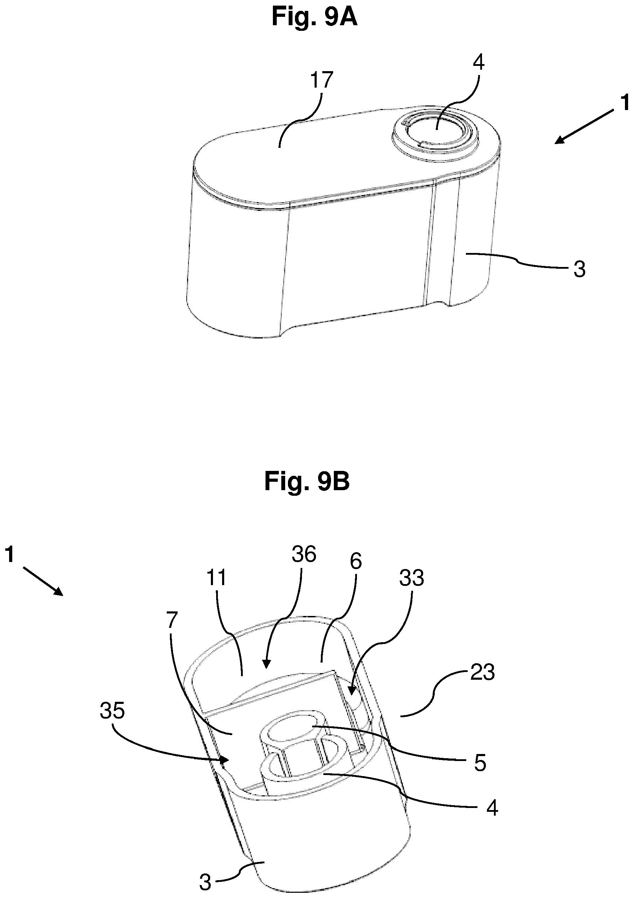

Bei den in Fig. 7, Fig. 8 und Fig. 10 gezeigten Ausführungsbeispielen ist die Trennwand 7 nach unten geöffnet, sodass ein Spalt zwischen dem Boden 6 des Behältnisses 3 und der Trennwand 7 verbleibt. Bei dem in Fig. 9 gezeigten Ausführungsbeispiel ist die Trennwand 7 zur Seite geöffnet, sodass ein Spalt zwischen der äußeren Wand 23 des Behältnisses 3 und der Trennwand 7 verbleibt. Hierbei ist die Öffnung 33 bis zum Boden 6 ausgebildet.

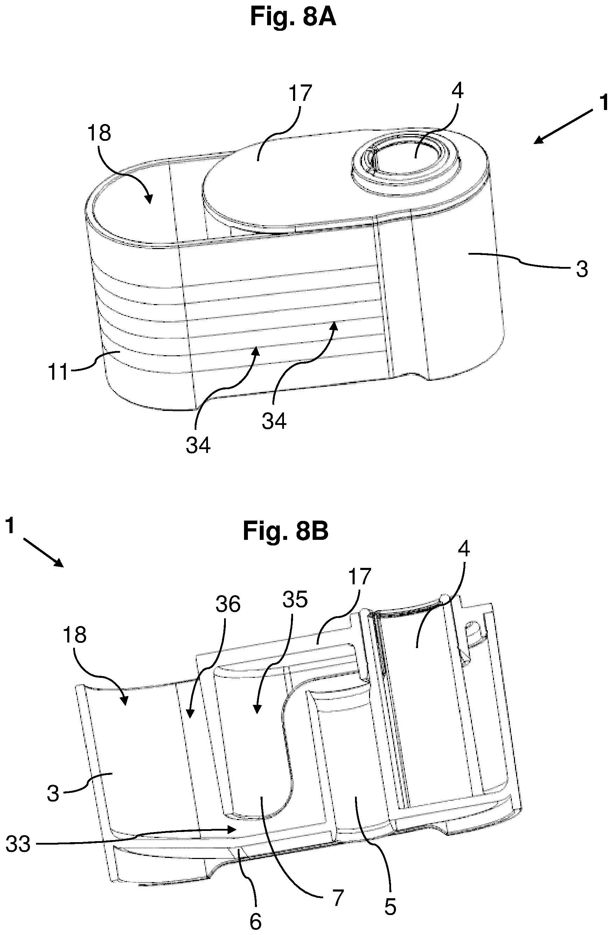

Bei den in Fig. 7 und Fig. 8 gezeigten Ausführungsbeispielen ist die Trennwand 7 am Deckel 17 ausgebildet. Bei dem in Fig. 9 gezeigten Ausführungsbeispiel ist die Trennwand 7 an einer Wand 23 des Behältnisses 3 und an dessen Umrandung 11 ausgebildet.

Bei den in Fig. 7, Fig. 8 und Fig. 10 gezeigten Ausführungsbeispielen sind außenseitig an der Umrandung 11 des Behältnisses 3 Füllstandslinien 34 ausgebildet, an denen ein Füllstand des Behältnisses 3 mit Süßungsmittel ablesbar ist.

Bei den Ausführungsbeispielen gemäß Fig. 7 bis Fig. 10 sind der Fluid-Einlass 4 und der Fluid-Auslass 5 in der ersten Kammer 35 ausgebildet. Innerhalb der zweiten Kammer 36 ist keine feste Struktur ausgebildet.

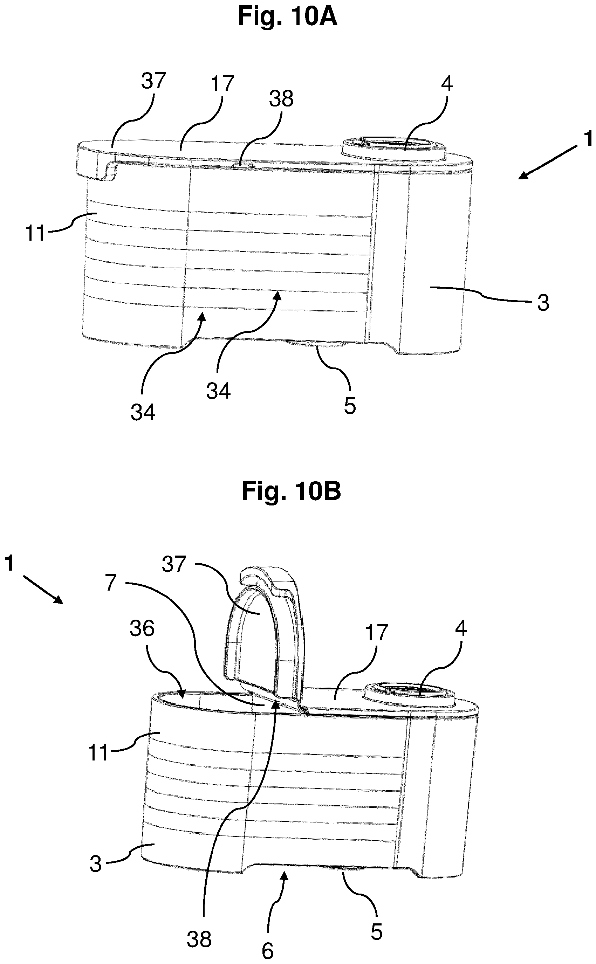

Bei dem Ausführungsbeispiel gemäß Fig. 8 endet der Deckel 17 mit der Trennwand 7, sodass die zweite Kammer 36 nach oben eine Öffnung 18 hat. Bei den Ausführungsbeispielen gemäß Fig. 7, Fig. 9 und Fig. 10 bedeckt der Deckel 17 das gesamte Behältnis 3, sodass dieses bis auf den Fluid-Eingang 4 nach oben vollständig verschlossen ist. Allerdings ist der Deckel 17 abnehmbar und in Fig. 10 aufklappbar, sodass das Behältnis 3 befüllt werden kann.

In alternativen Ausführungsbeispielen kann vorgesehen sein, dass der Deckel 17 ein Scharnier 38 oder ein sonstiges Gelenk hat, an dem der Deckel 17 nach oben geklappt oder auf sonstige Weise geöffnet werden kann. Ein derartiger alternativ ausgebildeter Deckel 17 ist beispielsweise kompatibel mit den in Fig. 7 und Fig. 9 gezeigten Ausführungsbeispielen, bei denen der Deckel 17 das Behältnis 3 vollständig abdeckt. Fig. 10 zeigt ein Ausführungsbeispiel mit einem klappbaren Deckel 17. Der Deckel 17 ist hinter der Trennwand 7 schmaler ausgebildet, sodass an der Schmalstelle ein Scharnier 38 ausgebildet ist, an dem der Deckel 17 insbesondere kann zum Befüllen des Behältnisses 3 mit Süßungsmittel nach oben geklappt werden kann. Hinter der Trennwand 7 ist der Deckel 17 daher als Klappe 37 ausgebildet. Fig. 10A zeigt einen Zustand, an dem der Deckel 17 heruntergeklappt ist und daher das Behältnis 3 verschließt. Fig. 10B zeigt einen Zustand mit geöffneten Deckel 17.

Die zuvor beschriebenen Ausführungsbeispiele erfindungsgemäß ausgebildeter Süßungseinheiten 1 sind zur Ausführung des weiter oben beschriebenen erfindungsgemäßen Verfahrens zum Süßen eines milchhaltigen Fluids besonders gut geeignet.

Zusammenfassend betrifft die Erfindung ein Verfahren zum Süßen eines milchhaltigen Fluids, welches dadurch gekennzeichnet ist, dass das milchhaltige Fluid durch ein Süßungsmittel hindurchgeleitet wird. Hierzu kann eine Süßungseinheit 1 für eine Abgabeeinrichtung 2 verwendet werden, bei der ein Fluid-Einlass 4 und ein Fluid-Auslass 5 so ausgebildet sind, dass ein Fluidstrom durch das Süßungsmittel erzeugbar ist. Die Süßungseinheit 1 kann vorzugsweise abnehmbar an einem Milch-Auslass 20 einer Milchleiteinheit 19 aufsetzbar oder aufgesetzt sein.

### Bezugszeichenliste

- 1: Süßungseinheit
- 2: Abgabeeinrichtung
- 3: Behältnis
- 4: Fluid-Einlass
- 5: Fluid-Auslass
- 6: Boden von 1
- 7: Trennwand
- 8: Schlitz
- 9: Krempe
- 10: freies Ende von 4
- 11: Umrandung von 1
- 12: erste Seitenwand von 5
- 13: Seitenrand
- 14: zweite Seitenwand von 5
- 15: Seitenrand
- 16: Bereich
- 17: Deckel
- 18: Öffnung
- 19: Milchleiteinheit
- 20: Milch-Auslass
- 21: Schwenkachse
- 22: Achse von 20
- 23: Wand von 3
- 24: Milch-Einlass
- 25: Luftzufuhr
- 26: Dampfzufuhr
- 27: Milchzufuhr
- 28: Luft-Milch-Kammer
- 29: Venturi-Düse
- 30: Mischkammer
- 31: Mulde
- 32: Bereich von 17
- 33: Öffnung in 3
- 34: Füllstandslinie
- 35: eine Kammer von 3
- 36: weitere Kammer von 3
- 37: Klappe
- 38: Scharnier

## Patentansprüche

1. Verfahren zum Süßen eines milchhaltigen Fluids, wobei das milchhaltige Fluid durch ein Süßungsmittel, insbesondere durch ein mit einem Süßungsmittel befülltes Behältnis (3), hindurchgeleitet wird, wobei das Hindurchleiten dadurch erfolgt, dass das milchhaltige Fluid durch ein Volumen, welches von dem Stoff, aus dem das Süßungsmittel besteht, eingenommen wird, hindurchgeleitet wird, **dadurch gekennzeichnet, dass** das Süßungsmittel ein flüssiges Süßungsmittel wie etwa ein Sirup ist und/oder dass das Süßungsmittel keine Formfestigkeit besitzt.

2. Verfahren nach dem vorangehenden Anspruch, **dadurch gekennzeichnet, dass** eine Viskosität des milchhaltigen Fluids niedriger als eine Viskosität des Süßungsmittels ist und/oder dass Milch zur Bildung des milchhaltigen Fluids zunächst aufgeschäumt wird, bevor sie in das Behältnis (3) geleitet wird, insbesondere wobei zum Aufschäumen die Milch mit Dampf versetzt wird.

3. Verfahren nach einem der vorangehenden Ansprüche, **dadurch gekennzeichnet, dass** das milchhaltige Fluid in das Behältnis (3) eingespritzt oder mit hoher Geschwindigkeit in dieses eingeleitet wird, sodass das milchhaltige Fluid durch das Süßungsmittel hindurchgeleitet wird, und/oder dass das in das Behältnis (3) gelangende milchhaltige Fluid von einem Strömungshindernis, insbesondere einer Wand (23, 11), einer Trennwand (7) und/oder einem Boden (6) des Behältnisses (3), umgelenkt wird und hierbei vorzugsweise eine Richtungsumkehr erfährt, bevor es aus dem Behältnis (3) austritt.

4. Verfahren nach einem der vorangehenden Ansprüche, **dadurch gekennzeichnet, dass** das milchhaltige Fluid so durch das Süßungsmittel hindurchgeleitet wird, dass es nach dem Eintritt in das Süßungsmittel dieses wieder nach oben verlässt, und/oder dass das milchhaltige Fluid so in das Behältnis (3) eingespritzt oder eingeleitet wird, dass es beim Eintritt nach unten gerichtet ist und/oder keine Geschwindigkeitskomponente nach oben hat.

5. Verfahren nach einem der vorangehenden Ansprüche, **dadurch gekennzeichnet, dass** das Süßungsmittel bei einem Einleiten des milchhaltigen Fluids ruht.

6. Süßungseinheit (1) für eine Abgabeeinrichtung (2) für ein milchhaltiges Fluid, insbesondere für einen Kaffee-Vollautomaten und/oder einen Milchaufschäumer (2), wobei die Süßungseinheit (1) ein Behältnis (3) für ein Süßungsmittel, einen Fluid-Einlass (4) und einen Fluid-Auslass (5) umfasst, wobei der Fluid-Einlass (4) und der Fluid-Auslass (5) so ausgebildet sind, dass ein Fluidstrom durch das Süßungsmittel erzeugbar ist, insbesondere wobei der Fluid-Auslass (5) als Überlauf (5) und/oder das Behältnis (3) trogförmig ausgebildet ist, **dadurch gekennzeichnet, dass** der Fluid-Einlass (4) als ein von einem oder dem Boden (6) der Süßungseinheit (1) nach oben ragender, vorzugsweise zylinderförmig ausgebildeter, Einlasskragen (4) ausgebildet ist, der zumindest in einem Bereich zur Seite nicht vollständig geschlossen ist.

7. Süßungseinheit (1) nach Anspruch 6, **dadurch gekennzeichnet, dass** der Fluid-Auslass (5) als ein von einem Boden (6) der Süßungseinheit (1) nach oben ragender, vorzugsweise zylinderförmig und/oder allseitig umströmbar ausgebildeter, Überlaufkragen (5) ausgebildet ist, insbesondere wobei der Überlaufkragen (5) zumindest in einem unteren Bereich zur Seite vollständig geschlossen ist, oberhalb des geschlossenen Bereichs geöffnet ist und/oder unten geöffnet ist.

8. Süßungseinheit (1) nach einem der Ansprüche 6 oder 7, **dadurch gekennzeichnet, dass** der Einlasskragen (4) innenseitig nach oben geöffnet und nach unten geschlossen ist, und/oder dass der Fluid-Einlass (4) mindestens einen Schlitz (8) aufweist, insbesondere wobei der Schlitz (8) vertikal verläuft und/oder wobei der Schlitz (8) seitlich in einem oder dem Einlasskragen (4) ausgebildet ist.

9. Süßungseinheit (1) nach einem der Ansprüche 6 bis 8, **dadurch gekennzeichnet, dass** der Fluid-Einlass (4) an seinem oberen Ende eine nach innen gebogene Krempe (9) aufweist, insbesondere wobei die Krempe (9) oberseitig angeschrägt ist, und/oder dass der Fluid-Einlass (4) zumindest an einem freien Ende (10) einen elastischen Querschnitt aufweist.

10. Süßungseinheit (1) nach einem der Ansprüche 6 bis 9, **dadurch gekennzeichnet, dass** der Fluid-Einlass (4), insbesondere der Einlasskragen (4), höher nach oben ragt als der Fluid-Auslass (5) und/oder dass der Überlauf (5) zu allen Seiten beabstandet ist von einer seitlichen Umrandung (11) der Süßungseinheit (1), insbesondere wobei der Überlauf (5) außenseitig und/oder die seitliche Umrandung (11) innenseitig keine Kanten ausbilden.

11. Süßungseinheit (1) nach einem der Ansprüche 6 bis 10, wobei der Fluid-Auslass (5) als Überlauf (5) ausgebildet ist, **dadurch gekennzeichnet, dass** eine erste Seitenwand (12) des Überlaufs (5) außenseitig bündig an einen Seitenrand (13) einer ersten Öffnung (8) des Fluid-Einlasses (4) anschließt, insbesondere wobei eine der ersten Seitenwand (12, 14) gegenüberliegende zweite Seitenwand (14, 12) außenseitig bündig an einen Seitenrand (15) einer zweiten Öffnung (8) des Fluid-Einlasses (4) anschließt.

12. Süßungseinheit (1) nach einem der Ansprüche 6 bis 11, **dadurch gekennzeichnet, dass** ein Schlitz (8) in dem Fluid-Einlass (4) nach oben geschlossen ist, insbesondere wobei der Fluid-Auslauf (5) den Schlitz (8) nach oben überragt oder wobei der Schlitz (8) den Fluid-Auslauf (5) nach oben überragt, und/oder dass der Fluid-Einlass (4) und der Fluid-Auslass (5) voneinander beabstandet sind.

13. Süßungseinheit (1) nach einem der Ansprüche 6 bis 12, **dadurch gekennzeichnet, dass** der Fluid-Einlass (4) und der Fluid-Auslass (5) ineinander übergehen, insbesondere wobei ein Bereich (16) eines Überlaufkragens (5) zugleich einen Bereich (16) des Einlasskragens (4) bildet.

14. Süßungseinheit (1) nach einem der Ansprüche 6 bis 13, **dadurch gekennzeichnet, dass** diese einen vorzugsweise im Bereich des Fluid-Einlasses (4) offenen Deckel (17) aufweist, insbesondere wobei der Deckel (17) und/oder die Süßungseinheit (1) eine Öffnung (18) zum Befüllen der Süßungseinheit (1) mit einem Süßungsmittel aufweist und/oder wobei der Deckel (17) einen Mechanismus, vorzugsweise einen Klappmechanismus aufweist, durch den das Behältnis (3) öffenbar und verschließbar ist.

15. Süßungseinheit (1) nach einem der Ansprüche 6 bis 14, **dadurch gekennzeichnet, dass** in dem Behältnis (3) eine dieses nur teilweise, vorzugsweise größtenteils, verschließende Trennwand (7) ausgebildet ist, insbesondere wobei die Trennwand (7) nach unten und/oder seitlich eine Öffnung (33) in dem Behältnis belässt und/oder wobei der Fluid-Einlass (4) und der Fluid-Auslass (5) auf einer gleichen Seite der Trennwand (7) ausgebildet sind.

16. Abgabeeinrichtung (2) für ein milchhaltiges Fluid, insbesondere Kaffee-Vollautomat, mit einer Süßungseinheit (1) und einem Grundgerät, wobei das Grundgerät eine Milchleiteinheit (19) mit einem Milch-Auslass (20) für ein milchhaltiges Fluid umfasst, **dadurch gekennzeichnet, dass** die Süßungseinheit (1) an dem Milch-Auslass (20) wieder abnehmbar aufsetzbar oder aufgesetzt ist und nach einem der Ansprüche 6 bis 15 ausgebildet ist.

17. Abgabeeinrichtung (2) nach Anspruch 16, **dadurch gekennzeichnet, dass** die Milchleiteinheit (19) eine Milchaufschäumvorrichtung (2) umfasst und/oder dass die Süßungseinheit (1) schwenkbar aufsetzbar oder aufgesetzt ist, insbesondere wobei eine Schwenkachse (21) durch eine Achse (22) des Milch-Auslasses (20) gebildet ist.

18. Verwendung einer Süßungseinheit nach einem der Ansprüche 6 bis 15 an einer Abgabeeinrichtung für ein milchhaltiges Fluid, insbesondere einem Kaffee-Vollautomaten nach einem der Ansprüche 16 oder 17, zum Süßen des milchhaltigen Fluids, insbesondere in einem Verfahren nach einem der Ansprüche 1 bis 5.

## Claims

1. Method for sweetening a milk-containing fluid, wherein the milk-containing fluid is conducted through a sweetening means, in particular through a container (3) filled with a sweetening means, wherein the process of conducting it through is undertaken by the milk-containing fluid being conducted through a volume which is occupied by the substance of which the sweetening means is composed, **characterized in that** the sweetening means is a liquid sweetening means, such as a syrup, and/or **in that** the sweetening means does not have dimensional stability.

2. Method according to the preceding claim, **characterized in that** a viscosity of the milk-containing fluid is lower than a viscosity of the sweetening means, and/or **in that** milk for forming the milk-containing fluid is first of all frothed before it is conducted into the container (3), in particular wherein the milk is mixed with steam for the frothing.

3. Method according to either of the preceding claims, **characterized in that** the milk-containing fluid is injected into the container (3) or is conducted at a high speed into the latter, and therefore the milk-containing fluid is conducted through the sweetening means, and/or in that the milk-containing fluid entering the container (3) is deflected by a flow obstacle, in particular a wall (23, 11), a partition (7) and/or a base (6) of the container (3), and, in the process, preferably undergoes a reversal in direction before it emerges out of the container (3).

4. Method according to one of the preceding claims, **characterized in that** the milk-containing fluid is conducted through the sweetening means in such a manner that, after entering the sweetening means, it leaves the latter again upwards, and/or **in that** the milk-containing fluid is injected or conducted into the container (3) in such a manner that, upon entry, it is directed downwards and/or does not have a speed component upwards.

5. Method according to one of the preceding claims, **characterized in that** the sweetening means is at rest when the milk-conducting fluid is conducted therein.

6. Sweetening unit (1) for a dispensing device (2) for a milk-containing fluid, in particular for a fully automatic coffee machine and/or a milk frother (2), wherein the sweetening unit (1) comprises a container (3) for a sweetening means, a fluid inlet (4) and a fluid outlet (5), wherein the fluid inlet (4) and the fluid outlet (5) are designed in such a manner that a fluid flow through the sweetening means can be produced, in particular wherein the fluid outlet (5) is designed as an overflow (5) and/or the container (3) is in the form of a trough, **characterized in that** the fluid inlet (4) is in the form of an inlet collar (4) which protrudes upwards from a or the base (6) of the sweetening unit (1), is preferably cylindrical and is not completely closed to the side at least in one region.

7. Sweetening unit (1) according to Claim 6, **characterized in that** the fluid outlet (5) is designed as an overflow collar (5) which protrudes upwards from a base (6) of the sweetening unit (1), and is preferably cylindrical and/or designed such that the flow can pass around it on all sides, in particular wherein the overflow collar (5) is completely closed to the side at least in a lower region, is open above the closed region and/or is open at the bottom.

8. Sweetening unit (1) according to either of Claims 6 and 7, **characterized in that** the inlet collar (4) is open upwards on the inner side and is closed downwards, and/or in that the fluid inlet (4) has at least one slot (8), in particular wherein the slot (8) runs vertically, and/or wherein the slot (8) is formed laterally in a or the inlet collar (4).

9. Sweetening unit (1) according to one of Claims 6 to 8, **characterized in that** the fluid inlet (4) has an inwardly bent rim (9) at its upper end, in particular wherein the rim (9) is bevelled on the upper side, and/or in that the fluid inlet (4) has an elastic cross section at least at a free end (10).

10. Sweetening unit (1) according to one of Claims 6 to 9, **characterized in that** the fluid inlet (4), in particular the inlet collar (4), protrudes upwards higher than the fluid outlet (5), and/or **in that** the overflow (5) is spaced apart on all sides from a lateral border (11) of the sweetening unit (1), in particular wherein the overflow (5) does not form edges on the outer side and/or the lateral border (11) does not form edges on the inner side.

11. Sweetening unit (1) according to one of Claims 6 to 10, wherein the fluid outlet (5) is in the form of an overflow (5), **characterized in that** a first sidewall (12) of the overflow (5) adjoins a side edge (13) of a first opening (8) of the fluid inlet (4) flush on the outer side, in particular wherein a second sidewall (14, 12) opposite the first sidewall (12, 14) adjoins a side edge (15) of a second opening (8) of the fluid inlet (4) flush on the outer side.

12. Sweetening unit (1) according to one of Claims 6 to 11, **characterized in that** a slot (8) in the fluid inlet (4) is upwardly closed, in particular wherein the fluid outlet (5) protrudes upwards over the slot (8), or wherein the slot (8) protrudes upwards over the fluid outlet (5), and/or **in that** the fluid inlet (4) and the fluid outlet (5) are spaced apart from each other.

13. Sweetening unit (1) according to one of Claims 6 to 12, **characterized in that** the fluid inlet (4) and the fluid outlet (5) merge into each other, in particular wherein a region (16) of an overflow collar (5) at the same time forms a region (16) of the inlet collar (4).

14. Sweetening unit (1) according to one of Claims 6 to 13, **characterized in that** said sweetening unit has a cover (17) which is open preferably in the region of the fluid inlet (4), in particular wherein the cover (17) and/or the sweetening unit (1) has an opening (18) for filling the sweetening unit (1) with a sweetening means, and/or wherein the cover (17) has a mechanism, preferably a flap mechanism, by which the container (3) is openable and closable.

15. Sweetening unit (1) according to one of Claims 6 to 14, **characterized in that** a partition (7) is formed in the container (3) so as to close the latter only partially, preferably for the most part, in particular wherein the partition (7) leaves an opening (33) downwards and/or laterally in the container, and/or wherein the fluid inlet (4) and the fluid outlet (5) are formed on the same side of the partition (7).

16. Dispensing device (2) for a milk-containing fluid, in particular a fully automatic coffee machine, having a sweetening unit (1) and a basic appliance, wherein the basic appliance comprises a milk-conducting unit (19) with a milk outlet (20) for a milk-containing fluid, **characterized in that** the sweetening unit (1) can be placed or is placed on the milk outlet (20), so as to be removable again, and is designed according to one of Claims 6 to 15.

17. Dispensing device (2) according to Claim 16, **characterized in that** the milk-conducting unit (19) comprises a milk frothing device (2), and/or **in that** the sweetening unit (1) can be placed on or is placed on pivotably, in particular wherein a pivot axis (21) is formed by an axis (22) of the milk outlet (20).

18. Use of a sweetening unit according to one of Claims 6 to 15 on a dispensing device for a milk-containing fluid, in particular a fully automatic coffee machine according to either of Claims 16 and 17, for sweetening the milk-containing fluid, in particular in a method according to one of Claims 1 to 5.

## Revendications

1. Procédé d'édulcoration d'un fluide contenant du lait, selon lequel le fluide contenant du lait traverse un édulcorant, en particulier un récipient (3) contenant un édulcorant, cette traversée consistant en ce que le fluide contenant du lait traverse un volume qui est rempli par le produit dont est constitué l'édulcorant, **caractérisé en ce que** l'édulcorant est un édulcorant liquide tel que, par exemple, un sirop et/ou que l'édulcorant ne possède aucune stabilité de forme.

2. Procédé selon la revendication précédente, **caractérisé en ce qu'**une viscosité du fluide contenant du lait est inférieure à une viscosité de l'édulcorant et/ou que le lait destiné à former le fluide contenant du lait est d'abord émulsionné avant d'être conduit dans le récipient (3), en particulier le lait étant mélangé avec de la vapeur pour l'émulsionner.

3. Procédé selon une des revendications précédentes, **caractérisé en ce que** le fluide contenant du lait est pulvérisé dans le récipient (3) ou injecté dans celui-ci à grande vitesse, de sorte que le fluide contenant du lait traverse l'édulcorant et/ou que le fluide contenant du lait arrivant dans le récipient (3) est dévié par un obstacle d'écoulement, en particulier une paroi (23, 11), une paroi de séparation (7) et/ou un fond (6) du récipient (3), et subit de ce fait de préférence un changement de direction avant de sortir du récipient.

4. Procédé selon une des revendications précédentes, **caractérisé en ce que** le fluide contenant du lait traverse l'édulcorant de terre sorte qu'il sort de l'édulcorant par le haut après y être entré et/ou que le fluide contenant du lait est pulvérisé ou conduit à travers le récipient (3) de telle sorte qu'il est dirigé vers le bas en entrant et/ou n'a aucune composante de vitesse vers le haut.

5. Procédé selon une des revendications précédentes, **caractérisé en ce que** l'édulcorant repose lors d'une introduction du fluide contenant du lait.

6. Unité d'édulcoration (1) pour un dispositif distributeur (2) destiné à un fluide contenant du lait, en particulier pour une machine à café et/ou un mousseur à lait (2), laquelle unité d'édulcoration (1) comprend un récipient (3) pour un édulcorant, une entrée de fluide (4) et une sortie de fluide (5), l'entrée de fluide (4) et la sortie de fluide (5) étant configurées de telle sorte qu'un flux de fluide peut être généré à travers l'édulcorant, en particulier la sortie de fluide (5) étant configurée comme un trop-plein (5) et/ou le récipient (3) en forme d'auge, **caractérisée en ce que** l'entrée de fluide (4) est configurée comme une collerette d'entrée (4), de préférence de forme cylindrique, saillant vers le haut à partir d'un ou du fond (6) de l'unité d'édulcoration (1), qui n'est pas totalement fermée sur le côté au moins dans une zone.

7. Unité d'édulcoration (1) selon la revendication 6, **caractérisée en ce que** la sortie de fluide (5) est configurée comme une collerette de trop-plein (5) de préférence de forme cylindrique et/ou pouvant recevoir un flux de tous côtés, saillant vers le haut à partir d'un fond (6) de l'unité d'édulcoration (1), en particulier cette collerette de trop-plein (5) étant totalement fermée sur le côté dans une zone inférieure et ouverte au-dessus de la zone fermée et/ou ouverte vers le bas.

8. Unité d'édulcoration (1) selon une des revendications 6 ou 7, **caractérisée en ce que**, du côté intérieur, la collerette d'entrée (4) est ouverte vers le haut et fermée vers le bas et/ou que l'entrée de fluide (4) présente au moins une fente (8), en particulier cette fente (8) courant verticalement et/ou cette fente (8) étant configurée latéralement dans une ou la collerette d'entrée (4).

9. Unité d'édulcoration (1) selon une des revendications 6 à 8, **caractérisée en ce que** l'entrée de fluide (4) présente à son extrémité supérieure un bord (9) courbé vers l'intérieur, en particulier ce bord (9) étant chanfreiné sur sa face supérieure, et/ou que l'entrée de fluide (4) présente une section élastique au moins à une extrémité libre (10).

10. Unité d'édulcoration (1) selon une des revendications 6 à 9, **caractérisée en ce que** l'entrée de fluide (4), en particulier la collerette d'entrée (4), saille davantage vers le haut que la sortie de fluide (5) et/ou que le trop-plein (5) est espacé sur tous les côtés d'une bordure latérale (11) de l'unité d'édulcoration (1), en particulier le trop-plein (5) ne présentant pas d'arête du côté extérieur ni la bordure latérale (11) du côté intérieur.

11. Unité d'édulcoration (1) selon une des revendications 6 à 10, dans laquelle la sortie de fluide (5) est configurée comme un trop-plein (5), **caractérisée en ce qu'**une première paroi latérale (12) du trop-plein (5) se raccorde du côté extérieur de façon jointive à un bord latéral (13) d'une première ouverture (8) de l'entrée de fluide (4), en particulier une deuxième paroi latérale (12, 14) opposée à la première paroi latérale (12, 14), se raccordant du côté extérieur de façon jointive à un bord extérieur (15) d'une deuxième ouverture (8) de l'entrée de fluide (4).

12. Unité d'édulcoration (1) selon une des revendications 6 à 11, **caractérisée en ce qu'**une fente (8) dans l'entrée de fluide (4) est close vers le haut, en particulier la sortie de fluide (5) dépassant la fente (8) vers le haut ou la fente (8) dépassant la sortie de fluide (5) vers le haut, et/ou que l'entrée de fluide (4) et la sortie de fluide (5) sont distantes l'une de l'autre.

13. Unité d'édulcoration (1) selon une des revendications 6 à 12, **caractérisée en ce que** l'entrée de fluide (4) et la sortie de fluide (5) se fondent l'une dans l'autre, en particulier une zone (16) d'une collerette de trop-plein (5) formant en même temps une zone (16) d'une collerette d'entrée (4).

14. Unité d'édulcoration (1) selon une des revendications 6 à 13, **caractérisée en ce qu'**elle présente dans la zone de l'entrée de fluide (4) un couvercle ouvert (17), en particulier le couvercle (17) et/ou l'unité d'édulcoration (1) présentant une ouverture (18) pour remplir l'unité d'édulcoration (1) avec un édulcorant et/ou le couvercle (17) présentant un mécanisme, de préférence un mécanisme de pliage, par le biais duquel le récipient (3) peut être ouvert et fermé.

15. Unité d'édulcoration (1) selon une des revendications 6 à 14, **caractérisée en ce que** dans le récipient (3) est configurée une paroi de séparation (7) obturant celui-ci partiellement, de préférence en majeure partie, en particulier cette paroi de séparation (7) laissant dans le récipient une ouverture (33) vers le bas ou sur le côté et/ou l'entrée de fluide (4) et la sortie de fluide (5) étant formées sur un même côté de la paroi de séparation (7).

16. Dispositif distributeur (2) pour un fluide contenant du lait, en particulier machine à café, avec une unité d'édulcoration (1) et un appareil de base, lequel appareil de base comporte une unité de conduite de lait (19) avec une sortie de lait (20) pour un fluide contenant du lait, **caractérisé en ce que** l'unité d'édulcoration (1) est ou peut être montée de manière amovible sur la sortie de lait (20) et est configurée selon une des revendications 6 à 15.

17. Dispositif distributeur (2) selon la revendication 16, **caractérisé en ce que** l'unité de conduite de lait (19) comporte un mousseur à lait (2) et/ou que l'unité d'édulcoration (1) est ou peut être montée de manière pivotante, en particulier un axe de pivotement (21) étant constitué par un axe (22) de la sortie de lait (20).

18. Utilisation d'une unité d'édulcoration selon une des revendications 6 à 15 sur un dispositif distributeur destiné à un fluide contenant du lait, en particulier une machine à café selon une des revendications 16 ou 17, pour édulcorer le fluide contenant du lait, en particulier selon un procédé selon une des revendications 1 à 5.
